# EUROPEAN PATENT APPLICATION

(11) **EP 3 474 533 A1**
(43) Date of publication of application: **24.04.2019**
(21) Application number: 17197536.0
(22) Date of filing: 20.10.2017
(51) Int. Cl.: H04N 5/232, G06K 9/00

(54) **DEVICE FOR DETECTING THE INTERACTION OF USERS WITH PRODUCTS ARRANGED ON A STAND WITH ONE OR MORE SHELVES OF A STORE**

(71) Applicant: Checkout Technologies srl, 37122 Verona (IT)
(72) Inventor: Levkovskiy, Jegor, 14020 Villa San Secondo (AT) (IT); Pandian, Enrico, 37129 Verona (IT)
(74) Representative: Bottino, Giovanni

(57) **Abstract**

Device for detecting the interaction of one or more users with one or more products (5) arranged on at least one portion of at least one shelf (10) of a stand (1) of a store, such as supermarket or the like. The device comprises video signal acquisition means and video signal processing means. Acquisition means comprise a plurality of video cameras (2) for at least a portion of at least said shelf (10), which video cameras (2) are placed above the products (5) and oriented towards the products (5).

## Description

The present invention relates to a device for detecting the interaction of one or more users with one or more products arranged on at least one portion of at least one shelf of a stand of a store, such as supermarket or the like, comprising video signal acquisition means and video signal processing means.

The development of modern digital and information technologies and the consequent reduction of costs, as well as simplicity of use of the technologies, in the last years have driven towards automation of processes also in common everyday activities.

One of the most widespread activities, such as doing shopping, has been subjected to a deep renovation and automation, in order to help users.

On-line shopping is more and more used, where a user can purchase products, also of everyday use, directly over Internet.

Therefore stores are obliged to adapt themselves by offering more and more technological, innovative and efficient services allowing users to do shopping in a simple and quick manner.

Thus processes taking place inside stores are desired to be automatized while limiting as much as possible the action of a possible shop assistant or person in charge of the store.

However the fact of maximizing the contribution of automatic systems for managing stores inevitably generates different drawbacks.

Leaving out of consideration security problems, related to shoplifting, concealment of goods and products, as well as product packaging tampering, the systems known in prior art have problems related to the management of stock, since it is particularly complicated to immediately accurately define the products purchased by the users, such to update in real-time both a possible shopping list of the users and the stock.

The difficulty in updating the shopping list in real-time does not allow the processes following the shopping to be automatized, such as for example the payment of purchased products.

The automation of payment is the target of systems known in prior art, since this is the most time spending action, due to the fact that it requires the recognition of purchased products and the association of them to the user.

Systems known in prior art suggest solutions that require the use of specific devices for product recognition or complicated and not much user friendly systems or systems requiring a high computational power.

It is also of great interest the analysis of consumer behavior, such to carry out marketing actions customized for the individual user. This field has been widely studied in the art of on-line sales, wherein prior art systems already automatically perform some very efficacious marketing actions, such as for example the suggestion of items related or alternative to the selected item. For example this is the case of cross selling, that is the strategy of selling an additional product or service with respect to what required by the user, after having consolidated and confirmed the sale of the first one, or up selling, that is the sales technique aiming at offering to the consumer something having a higher value than his/her initial sales choice. Another marketing action useful in presence of a user profiling is the application of dedicated discounts.

No systems known in prior art allows such types of actions to be efficaciously transported into a physical store.

Therefore there is the unsatisfied need for systems known in prior art to provide an efficient system easy to be used, that allows procedures in a store to be speed up, by the automation of critical processes, such as for example payment.

The present invention achieves the above objects by providing a device for detecting the interaction of one or more users with one or more products arranged on at least one portion of at least one shelf of a stand of a store, such as described hereinbefore, wherein acquisition means comprise a plurality of video cameras for at least a portion of at least said shelf, which video cameras are placed above the products and oriented towards the products.

Advantageously the means processing the video signal are configured to carry out a recognition of the products on the stand and the gestures of users interacting with such products.

It is possible to provide a stand with several shelves, wherein video cameras are provided on all the shelves, or only on some shelves, or on one shelf. Video cameras can point at the whole shelf or only a portion thereof.

Thus the shelf of the stand is provided with a plurality of video cameras, allowing a better accuracy to be obtained with respect to for example the use of external video cameras that record the whole stand entirely or in frames comprising more shelves. The fact of placing the video cameras above the products allows a good vision of the products in the shelf to be obtained. This is particularly advantageous when the shelf has dimensions strictly proportioned to the highest products and therefore there is a small space between the top of the products and the shelf immediately above them.

In one embodiment the video cameras are arranged such to superimpose at least partially their respective fields of view.

This avoids the presence of ranges not included in the field of view of any video camera and therefore it guarantees that no product is in a position at least partially not included in the video acquisition. This further allows a redundancy to be provided at the outermost parts of the field of view of each video camera to increase the accuracy of the recognition.

According to one embodiment, the aperture of the field of view of the video cameras ranges from 50° to 80°.

Such aperture range has been found to be optimal for typical dimensions of a stand and it identifies the best field of view for seeing products on the stand.

In one embodiment the distance between video cameras ranges from 3 to 10 cm.

Such distance range is particularly suitable above all in combination with the above apertures, to obtain the best superimposition of the fields of view of video cameras.

According to a particularly advantageous embodiment, video signal processing means are configured to carry out a combination of the video streams of a plurality of said video cameras adjacent one another for generating a combined video stream. Video signal processing means analyse such combined video stream for recognizing the products on the stand and/or for recognizing the gestures of a user.

Processing means are configured to carry out a combination of video streams according to a technique known in prior art as "stitching", wherein the several frames belonging to the different video streams are combined in a panoramic frame. The dimensions described above and the superimposition of fields of view resulting therefrom have been found to be optimal for such combination process. The combined video stream generated by such combination process is then analysed by video signal processing means. This guarantees a less computational effort with respect to the separate analysis of the different video streams generated by the video cameras.

In one embodiment, for each shelf provided with a corresponding shelf immediately above it, video cameras are placed at the access edge of the shelf above.

Such positioning allows the video cameras to have a front vision on products, that is a vision similar to the one of a user that stands in front of the stand, contemporaneously maintaining a vision from above. This allows all the products to be seen but above all the products in the first row to be entirely seen, that is those that are more likely to be the object of interaction by a user.

According to one embodiment, there is provided an element supporting a plurality of said video cameras.

A single support element for a plurality of video cameras prevents all the video cameras from being properly oriented one by one and it advantageously has such a shape to obtain the proper orientation of the video cameras by being installed by not necessarily specialized operators.

As regards the upper end support shelf, that cannot be provided with a corresponding shelf immediately above it, preferably there are provided specific support elements for positioning the video cameras in the same position as that of other shelves.

In one embodiment the support element is a plate element having a length ranging from 30 to 50 cm.

Such dimensions, in combinations with the above values of distance between video cameras, allow 5 or 6 video cameras to be provided on a single support element, preferably but not necessarily equally spaced from each other.

The support element can be provided with means fastening to a further support element, such that it is possible to link a plurality of support elements placed in line to record shelves having different measurements. It is further possible to use a plurality, even very wide, of support elements linked and/or connected one another to form a detection network.

In one embodiment the support element is a plate element that has a fastening edge, the fastening edge being provided with means fastening to the access edge of a shelf.

Such configuration of the support element causes the video cameras to be placed beyond the access edge of shelves and therefore, besides having a vision from above the shelf, they have a point of view placed externally to the stand volume identified by two adjacent shelves.

In a further improvement the support element has a rear face on which video cameras are fastened and a front face intended to support information means related to products.

Such characteristics has the advantage of joining in a single element both the task of supporting the video cameras and the task of supporting product related information means such as for example a label or tag showing the price, the unit price, the name and possible discounts related to the product.

In a further embodiment, on the front face of the support element one or more video cameras are fastened oriented towards the user to detect the face of users. Such video cameras are connected to video signal processing means, which processing means are configured to carry out a recognition of the characteristics of the detected faces.

The device of the present invention thus can be used for marketing purposes, for example if associated with one or more audio/video apparatuses or other types of apparatuses that allow interacting with the user near the device to propose him/her promotion messages, discounts or other marketing activities. In addition to all the marketing activities known in prior art, it is possible to carry out also those that currently belong only to e-commerce and that can be performed only with the possibility of knowing where the user exactly stands and with which products he/she interacts.

The recognition of characteristics of the detected faces allows also information to be derived such as age, sex, face expression, mood, hair color, skin color and the like.

The recognition of characteristics of the detected faces allows the use near the device to be profiled and therefore marketing actions to be customized. For example, for a promotion campaign of a specific product whose predetermined target is a given type of purchasers, for example women from 18 to 35 years with red hair, the device can analyse the user faces and recognize such characteristics. When such characteristics are recognized, it is possible to activate an attraction message to draw the attention of the user, for example by showing a customized video on a monitor, activating audio contents by loudspeakers or the like.

The recognition of the face expression of the users is particularly important for evaluating purchase trends, above all as regards marketing. Such recognition makes it possible to associate a specific expression during the purchase of a specific product, obtaining a feedback about user satisfaction.

The present invention further relates to a method for detecting the interaction of one or more users with one or more products arranged on at least a portion of at least one shelf of a stand of a store, such as supermarket or the like, comprising the following steps:
a) for at least a portion of at least said shelf, acquiring video streams by a plurality of video cameras, which video cameras visualize the products, where the video cameras placed adjacent one another have fields of view at least partially superimposed with one another;
b) combining the video streams for generating a combined video stream;
c) analysing the combined video stream for the recognition of products on the stand and/or for recognition of gestures of a user.

In one embodiment, there are provided the following steps:
d) acquiring one or more further video streams by one or more video cameras oriented towards the users for detecting the user faces;
e) analysing the further video streams to recognize the characteristics of the detected faces.

These and other characteristics and advantages of the present invention will be more clear from the following description of some embodiments shown in the annexed drawings wherein:
fig. 1 is one embodiment of the device according to a top view of the shelf of a stand;
fig.2 is an internal view of a shelf;
fig.3 is a side view of a shelf;
fig. 4 is a detailed view of a video camera;
fig. 5 is a front view of a shelf;
fig. 6 is a flow chart of one embodiment of the method.

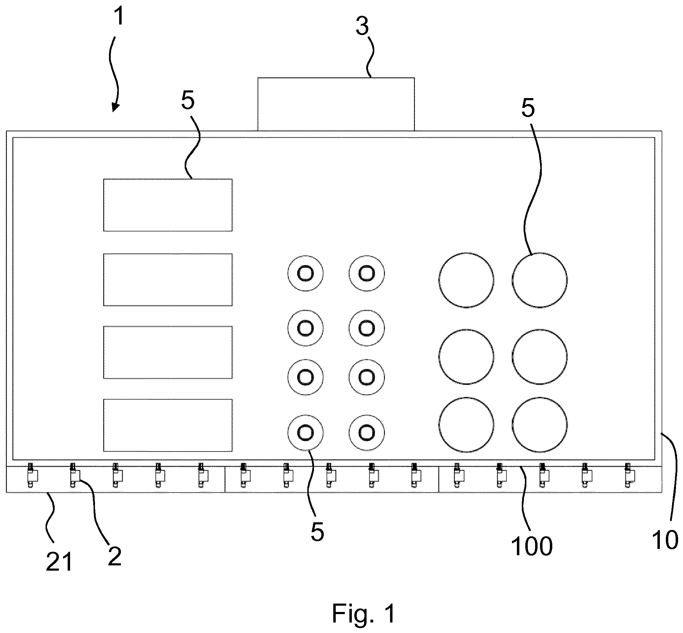

Figure 1 shows one embodiment of the device detecting the interaction of one or more users with one or more products 5 arranged on at least one portion of at least one shelf 10 of a stand 1 of a store. The store can be a supermarket, a neighborhood store, a warehouse or the like.

The figure shows a single shelf 10 of the stand 1, on which a plurality of products 5 is arranged that can be picked up by a user.

The device comprising video signal acquisition means and video signal processing means.

Acquisition means comprise a plurality of video cameras 2 for each shelf 1. Video cameras 2 are placed above the products 5 and are oriented towards the products 5.

Video signal processing means comprise a processing unit 3 configured to receive as input the video streams generated by the video cameras and to recognize the products 5 on the stand and the gestures of users interacting with such products 5.

Video signal processing means comprise one or more neural networks connected to video cameras 2 for recognizing the products 5 on the stand 1 and the gestures of users: this allows the interaction of users with products 5 arranged on the stand 1 to be detected, particularly it allows understanding whether the user has picked up, moved or released a specific product 5 on the stand 1.

There are further provided one or more video cameras oriented towards the users, not shown in figures, to detect faces of users. Also such video cameras are connected to neural networks to recognize the characteristics of the detected faces.

Neural networks are specifically trained and set to recognize visual patterns identifying a series of previously acquired products and faces available in one or more datasets that can be accessed by the device. There is provided a step training the neural networks, which training step uses the predetermined datasets of products: datasets are transmitted as input to the neural network, that adapts itself for recognizing what is present in the dataset.

For example for the recognition of a product, the images of the product are acquired and during the training of neural networks some characteristics (color of pixels, position and points of view of the product, etc.) of the acquired images are slowly modified to optimize the recognition on such dataset.

Thus the neural network learns to recognize not only such dataset, but it is able also to recognize situations with changes different from the origin dataset, such as for example a point of view different from those in the dataset, but with enough information to go back to a known product or gesture.

The neural network is able also to accomplish a self-learning. If the network is not able to make a recognition of an item, it can be indicated by an operator. The neural network uses information received from the operator to learn to recognize better the product and therefore to improve its own performances.

The device of the present invention can be part of a wider system automatically filling in a list of products 5 picked up by a user in the store.

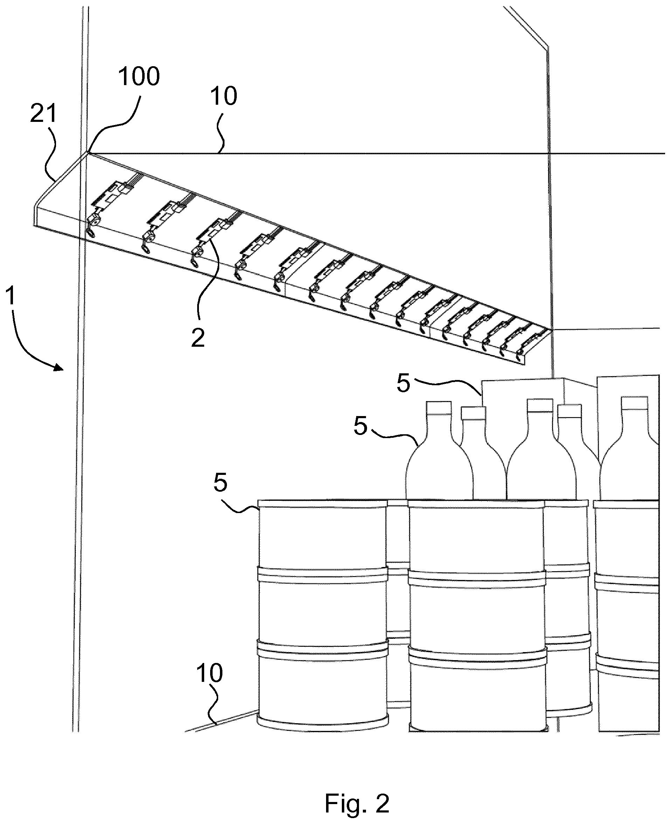

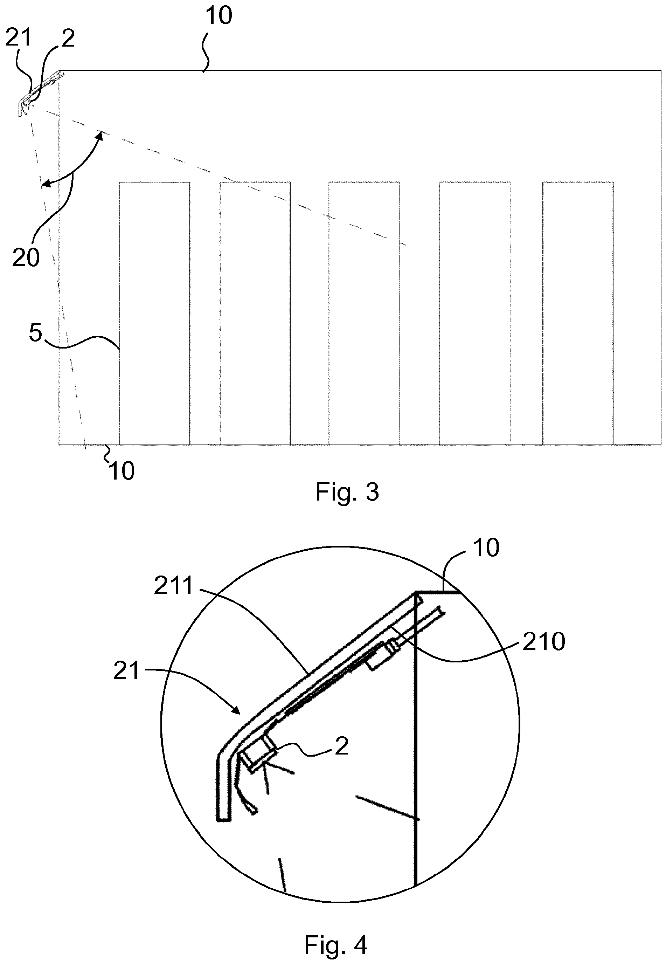

Figures 2 and 3 show one preferred embodiment for the positioning of video cameras 2. Video cameras 2 can be of any type known in prior art, with reduced dimensions such to be provided in a sufficient number for each shelf 1.

Advantageously video cameras 2 are arranged such to superimpose at least partially their respective fields of view. The aperture of the field of view of the video cameras ranges from 50° to 80°, and preferably corresponds to 60°, as denoted by arrow 20 in figure 3. The distance between video cameras ranges from 3 to 10 cm. Such dimensions have been calculated considering a focal length of 4 cm.

For each shelf 10 provided with a corresponding shelf 10 immediately above it, video cameras 2 are placed at the access edge 100 of the upper shelf. This can be seen for example in figure 4, where products 5 placed in the lower shelf 10 fall within the field of view of a plurality of video cameras 2 placed at the access edge 100 of the shelf immediately above it.

The device comprises a support element 21 for a plurality of video cameras 21. It is possible to provide several support elements 21 for each shelf. In the preferred embodiment shown in figures there are provided three support elements 21 linked with one another to form a single longer support element 21 for each shelf 10. All the video cameras 2 oriented towards that shelf are fastened on the support element 21.

The support element 21 is a plate element with a length ranging from 30 to 50 cm, preferably 34 cm. The support element 21 has a longitudinal fastening edge. Such fastening edge is provided with means fastening to the access edge of a shelf 10. Fastening means can be of any currently known type such as screws and brackets, rivets, gluing, snap-fit or the like.

The support element 21, in the condition fastened to the access edge of a shelf, orients its own video cameras 2 towards the shelf below.

As visible in details in figure 4, the support element 21 and its fastening means are shaped such that in the engaged condition, the support element 21 is inclined downwards such to have an upper edge engaged on the access edge of the shelf and one lower free edge. Since the video cameras 2 are fastened to the support element 21, the inclination degree of the support element 21 determines the orientation of the viewing cone of video cameras 2 towards the products 5 of the shelf 10 below.

As regards the upper end support shelf 10, that cannot be provided with a corresponding shelf 10 immediately above it, preferably there are provided specific support elements to place the video cameras 2 in the same position provided for the other shelves 10.

Such as shown in figure 4, the support element 21 is mounted inclined on a shelf 10 such that it has a rear and lower face 210 on which video cameras 20 are fastened and a front and upper face 211 which is intended to support information means for the products.

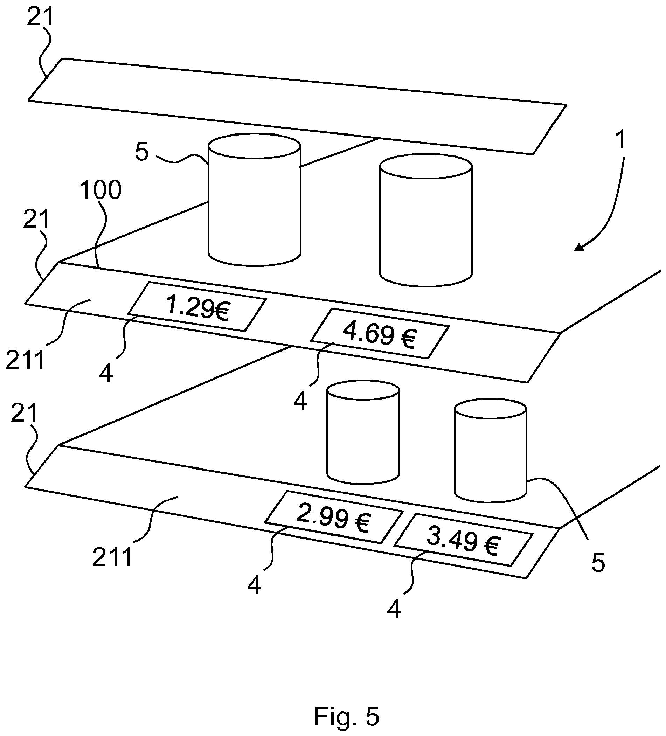

Figure 5 shows one embodiment of information means provided on the front and upper face 211 of the support element 21. Information means related to products can be for example a label 4 indicating the price, such as also the unit price, the name, possible discounts related to the product 5 or the like.

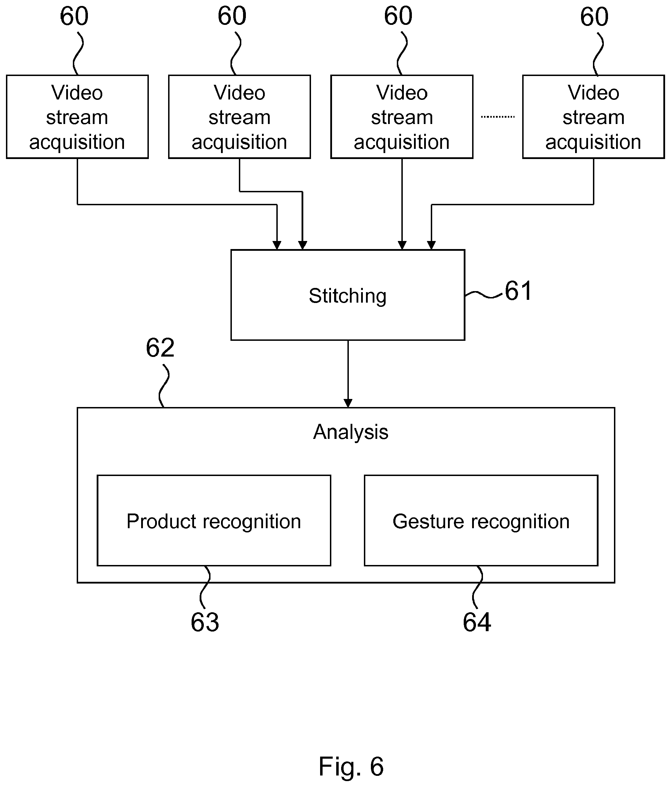

Figure 6 shows a flow chart of one embodiment of the method.

Each video camera 2 generates a video stream 60 on a field of view. Video cameras 2 placed adjacent each other have at least partially superimposed fields of view. Video signal processing means perform a combination 61 of the video streams for generating a combined video stream. Video signal processing means perform an analysis 62 of such combined video stream, which analysis 62 comprises a step recognizing products 63 on the shelf and/or recognizing gestures 64 of a user.

## Claims

1. Device for detecting the interaction of one or more users with one or more products (5) arranged on at least one portion of at least one shelf (10) of a stand (1) of a store, such as supermarket or the like, comprising video signal acquisition means and video signal processing means,
**characterized in that**
acquisition means comprise a plurality of video cameras (2) for at least a portion of at least said shelf (10), which video cameras (2) are placed above the products (5) and oriented towards the products (5) .

2. Device according to claim 1, wherein video cameras (2) are arranged such to superimpose at least partially their respective fields of view.

3. Device according to claim 1 or 2, wherein the aperture of the field of view of the video cameras (2) ranges from 50° to 80°.

4. Device according to one or more of the preceding claims, wherein the distance between video cameras (2) ranges from 3 to 10 cm.

5. Device according to one or more of the preceding claims, whereon video signal processing means are configured to carry out a combination of the video streams of a plurality of said video cameras (2) adjacent one another for generating a combined video stream, said video signal processing means analysing such combined video stream for recognizing the products (5) on the stand (1) and/or for recognizing the gestures of a user.

6. Device according to one or more of the preceding claims, wherein for each shelf (10) provided with a corresponding shelf (10) immediately above it, video cameras (2) are placed at the access edge (100) of the shelf (10) above.

7. Device according to one or more of the preceding claims, wherein a support element (21) is provided for a plurality of said video cameras (2).

8. Device according to claim 7, wherein the support element is a plate element having a length ranging from 30 to 50 cm.

9. Device according to claim 7 or 8, wherein the support element (21) is a plate element that has a fastening edge, the fastening edge being provided with means fastening to the access edge (100) of a shelf (10).

10. Device according to claim 9, wherein the support element (21) has a rear face (210) on which video cameras (2) are fastened and a front face (211) intended to support information means (4) related to products (5).

11. Device according to claim 10, wherein on the front face of the support element one or more video cameras are fastened oriented towards the user to detect the face of users, which video cameras are connected to video signal processing means, which processing means are configured to carry out a recognition of the characteristics of the detected faces.

12. Method for detecting the interaction of one or more users with one or more products (5) arranged on at least a portion of at least a shelf (10) of a stand of a store, such as supermarket or the like,
**characterized in that**
it comprises the following steps:
a) for at least a portion of at least said shelf (10), acquiring (60) video streams by a plurality of video cameras (2), which video cameras (2) visualize the products (5), where the video cameras (2) placed **adjacent one another have fields of view at least** partially superimposed with one another;
b) combining (61) the video streams for generating a combined video stream;
c) analysing (62) the combined video stream for the recognition (63) of products on the stand and/or for recognition (64) of gestures of a user.

13. Method according to claim 12, wherein there are provided the following steps:
d) acquiring one or more further video streams by one or more video cameras oriented towards the users for detecting the user faces;
e) analysing the further video streams to recognize the characteristics of the detected faces.
